(19) Europäisches Patentamt
European Patent Office
Office européen des brevets

(11) Publication number: **0 086 896**
**B1**

(12) **EUROPEAN PATENT SPECIFICATION**

(45) Date of publication of patent specification: **04.11.87**

(51) Int. Cl.$^4$: **C 25 B 15/08,** C 25 B 1/30, H 01 M 4/86

(21) Application number: **82111803.1**

(22) Date of filing: **20.12.82**

(54) **Improved method of operating a liquid-gas electrochemical cell.**

(30) Priority: **18.02.82 US 349891**
**03.08.82 US 404689**

(43) Date of publication of application:
**31.08.83 Bulletin 83/35**

(45) Publication of the grant of the patent:
**04.11.87 Bulletin 87/45**

(84) Designated Contracting States:
**AT BE CH DE FR GB IT LI NL SE**

(56) References cited:
**CH-A-584 970**
**DE-A-1 671 496**
**US-A-3 969 201**

**DR. OTTO-ALBRECHT NEUMÜLLER "Römpps Chemie-Lexikon", 7th edition, part 1: "A-C" 1972 FRANCKH'SCHE VERLAGSHANDLUNG, Stuttgart page 81**

(73) Proprietor: **THE DOW CHEMICAL COMPANY**
**2030 Dow Center Abbott Road P.O. Box 1967**
**Midland, MI 48640 (US)**

(72) Inventor: **McIntyre, James Arthur**
**2115 Burlington**
**Michigan 48640 (US)**
Inventor: **Phillips, Robert Floyd**
**649 South 8 Mile**
**Michigan 48640 (US)**

(74) Representative: **Weickmann, Heinrich, Dipl.-Ing. et al**
**Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Postfach 860820**
**D-8000 München 86 (DE)**

**EP 0 086 896 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention is an improved method of operating an electrochemical cell.

Gas electrodes, for example oxygen electrodes, are well known in the art and are useful in many processes including chlor-alkali processes and processes for the production of hydrogen peroxide. Oxygen electrodes are generally porous. In such electrodes, reactions occur at the point(s) where there is a three-phase contact between a gas, an electrolyte solution and a solid electrical conductor. To maximize the efficiency of the electrode, the amount of the three-phase contact area should be maximized. If the electrode is filled with the electrolyte, the rate of mass transfer of gas to the electrical conductor is too slow to be significant and is therefore not useful. Conversely, if the electrode is filled with gas, the absence of the electrolyte solution allows only insignificant amounts of reactions to occur.

Packed bed electrolytic cells of the type described in U.S. Patents 3,969,201 and 4,118,305 are commonly used. A porous separator separates the packed bed electrode from the adjoining electrode and is supported by the packed bed electrode. The pores of the separator are sufficiently large to allow free flow of electrolyte into the openings of the packed bed electrode. Electrochemical reactions occur within the electrode at a gas-electrolyte-electrode interface. The liquid products and unreacted electrolyte flow by gravity to the bottom of the packed bed electrode. The electrolyte and the gas are introduced in the porous electrode simultaneously and at the same side of the separator. Mass transfer is a problem in such cells because the electrode is almost flooded with electrolyte. Reactions are slow and recycle of the product is necessary.

The invention resides in a method for electrochemically reacting a liquid with a gas in an electrochemical cell of the type having at least two electrodes separated by a liquid permeable separator. The essential features of the method according to the invention are defined in claim 1. Preferred features are defined in the dependent claims.

Fig. 1 illustrates one embodiment of the invention in an electrolytic cell which has a diaphragm-type separator.

Fig. 2 shows another embodiment of the invention. Illustrated is an electrolytic cell which has an ion exchange membrane in addition to a diaphragm-type separator.

In the illustrated embodiment of the invention, Fig. 1 shows an electrolytic cell 100. The cell has an anode 120 which is located in an anolyte chamber. An electrolyte inlet port 116 opens into the anolyte chamber. A gaseous product outlet port 122 is located in the anolyte chamber.

The cathode 106 is an electrically conductive porous mass having a plurality of pores passing therethrough. It may be a bed of electroconductive sintered particles or an agglomeration of loose particles. It must have pores of sufficient size and number to allow both gas and liquid to flow therethrough. The pores must also be of a sufficient size such that nonvolatile products will flow by gravity to the lower portion of the cathode 106, i.e., the cathode should be "self-draining". Another way of expressing this is to describe the pores as being large enough so that gravity has a greater effect on the liquid in the electrode than does capillary pressure.

Optionally, the cathode may be supported in some manner. For example, Fig. 1 shows a porous screen support 102 for the cathode.

A diaphragm-type separator 112 is positioned against, and supported by, the cathode 106 or by the cathode support 102. It may be a mass of tightly packed fibers such as asbestos or fluorocarbon fibers which may be woven or merely agglomerated in a random fashion. The separator 112 may be a plurality of layers or a single layer. However, the separator material should be substantially chemically inert to the chemicals that it will contact under ordinary operating conditions. The separator is constructed so that it has a somewhat limited ability to allow a liquid to flow therethrough. Uncontrolled flow of liquid through the separator is intolerable in the present invention.

Fig. 2 illustrates another embodiment of the invention. It shows an electrolytic cell 101 having an ion exchange membrane 124. This embodiment operates in a manner quite similar to the cell illustrated in Fig. 1. Here, the ion exchange membrane acts as a barrier to control the migration of ions into and out of the cathode chamber 128.

In the embodiment of Figure 2, the hydraulic pressure on the separator 112 is controlled in the same manner as was discussed in relation to the cell in Fig. 1.

As with the embodiment in Fig. 1, the electrolyte which is in contact with the separator must exert a hydraulic pressure on the separator. In Fig. 2, however, it is the electrolyte in the cathode chamber 128 which exerts the critical hydraulic pressure. Thus, the method of controlling the hydraulic pressure of the electrolyte on the separator refers to the electrolyte in the cathode chamber 128, rather than to the electrolyte in the anode chamber 118 of Fig. 1.

In the invention, liquid flow through the separator 112 should be controlled at a level sufficient to fill only a portion of the pores in the cathode 106. If too much liquid passes through the separator and substantially all of the pores of the cathode 106 are filled, the presence of oxygen gas is minimized. This results in a very slow reaction to form the products of electrolysis. Conversely, if too little electrolyte passes through the separator 112 and into the pores of the cathode 106, the electrochemical reactions will be minimized. A critical aspect of the present invention is to prevent the almost total filling of the cathode pores while at the same time preventing the almost total absence of electrolyte from the cathode pores.

The volume of liquid flowing through a porous

separator is thought to be defined by the following equation:

$$V = \frac{KA\Delta P}{\mu d}$$

Where

V=volume flow rate, $cm^3/sec$

K=permeability, $cm^2$

A=geometric area of the surface of the separator contacted by the liquid, $cm^2$

$\Delta P$=pressure drop across the separator, g/cm $sec^2$

$\mu$=liquid viscosity, g/cm sec

d=separator thickness, cm.

Generally, the viscosity ($\mu$) of the liquid is constant and depends upon the process in which the invention is used. The construction of the separator determines its thickness (d) and its permeability (K).

Generally, diaphragms used in chlor-alkali electrolytic cells have permeabilities (K) from $1\times10^{-8}$ to $1\times10^{-10}$ $cm^2$. Naturally this varies with the variables in the equation shown above.

Thus, there are two convenient means for controlling the flow through the separator into the electrode. One way is by varying the area (A) of the separator contacted by the liquid and a second way is by adjusting $\Delta P$, the pressure drop across the separator.

A convenient way of controlling the area of the separator exposed to the liquid is by increasing or decreasing the height of the liquid reservoir adjoining the separator. As the height is increased, the flow through the separator increases. Conversely, as the height is decreased, the flow decreases.

The other method of controlling the flow through the separator is by controlling the pressure drop across the separator. This pressure drop may be controlled in several ways.

One method of controlling the pressure drop across the separator is by operating the chamber opposite the self-draining electrode under gas or liquid pressure. In this method, the opposing chamber is sealed from the atmosphere and gas pressure or liquid pressure is exerted on the electrolyte. High pressure pumps may be used to force a pressurized liquid into the opposing chamber or pressurized gas may be fed to the chamber.

Another method of controlling the pressure drop across the separator is by pulling a vacuum on the self-draining electrode side of the separator. This will pull the electrolyte toward and through the separator and finally into the self-draining electrode.

The herein described method may be used in any process in which a liquid is reacted with a gas. It is particularly useful in electrochemical cells. It is particularly useful in cells used for the production of hydrogen peroxide, for the production of chlorine and caustic and for the production of energy (fuel cells).

For the production of chlorine and caustic a NaCl brine solution is fed into the anode compartment of an electrolytic cell 100 through inlet port 116. The electrolyte contacts the anode 120 and the diaphragm-type separator 112. Hydraulic pressure is exerted by the electrolyte upon the separator 112.

An oxygen containing gas enters the porous, self-draining cathode 106 through a gas inlet 104. The gas flows through the pores of the cathode 106 where electrochemical reactions occur with the electrolyte. At least a portion of the gas is consumed in such reactions to produce sodium hydroxide. The liquid sodium hydroxide flows by gravity to the lower portion of the cathode 106 and is removed through outlet port 108.

The hydraulic pressure of the electrolyte against the separator 112 is controlled at a level which will force the electrolyte to flow through the separator 112 and into the porous, self-draining cathode 106.

Example 1

An aqueous slurry containing asbestos fibers was prepared. The slurry was vacuum drawn through a porous plate and a substantial portion of the asbestos was thereby deposited on the porous plate. Asbestos was so deposited until the asbestos layer of the separator had a thickness of 1/8 (0.32 cm) to 1/4 inch (0.5 cm).

The so-formed separator was subjected to a series of measurements to determine the flow rate of a fluid through the separator at various fluid head pressures.

The results were as follows:

| Head pressure pascal (psi) | Flow ($ml/sec\text{-}cm^2$) |
|---|---|
| 3,430 0.5 | $8.2\times10^{-4}$ |
| 6,890 1.0 | $1.4\times10^{-3}$ |
| 10,290 1.5 | $2.0\times10^{-3}$ |
| 17,780 2.0 | $2.6\times10^{-3}$ |
| 17,250 2.5 | $3.1\times10^{-3}$ |
| 20,680 3.0 | $3.6\times10^{-3}$ |
| 24,110 3.5 | $4.0\times10^{-3}$ |

The invention is also applicable to the electrolytic production of peroxide solutions and specifically to the production of alkaline peroxide solutions.

Peroxide solutions are known to spontaneously decompose. The causes for such decomposition are thought to be (1) autodecomposition of the peroxide itself; and (2) catalytic decomposition caused by impurities in the peroxide solution.

Autodecomposition is commonly controlled by adjusting the pH of a peroxide solution to about 4.5 to 5.0, whereas, catalytic decomposition is minimized by adding stabilizing agents to the peroxide solution. Suitable stabilizing agents are known to include such things as stannates, phosphates and 8-hydroxyquinoline (*Hydrogen Peroxide*; W. C. Schumb, C. N. Satterfield, and R. L. Wentworth; pp. 535—543, Reinhold Publishing Corporation, 1955, New York, New York).

Recently developed electrochemical processes use an alkaline electrolyte to produce an alkaline peroxide solution. The high pH of the electrolyte causes a substantial amount of the peroxide to decompose during electrolysis in the cell. Thus, electrical energy is wasted by producing peroxides which decompose before they can be recovered. This autodecomposition problem is compounded by the usual catalytic decomposition problem.

The production of alkaline peroxide solutions involves the cathodic reduction of oxygen. The reactions are thought to proceed as follows:

$$O_2+H_2O+2e^-\rightarrow HO_2^-+OH^-$$
$$HO_2^-+H_2O\rightarrow H_2O_2+OH^-.$$

A more complete description of the reactions, the apparatuses and the processes used to produce alkaline peroxide solutions are found in the following patents and publications: U.S. Patent 4,118,305, Oloman et al., October 3, 1978; U.S. Patent 3,969,201, Oloman et al., July 13, 1976; U.S. Patent 3,507,769, Grangaard, April 21, 1970; U.S. Patent 3,454,477, Grangaard, July 8, 1969; U.S. Patent 3,462,351, Grangaard, August 19, 1969; "The Electroreduction of Oxygen to Hydrogen Peroxide on Fixed-Bed Cathodes", Oloman and Watkinson, *The Canadian Journal of Chemical Engineering*, Volume 54, pp. 312—318, August, 1976; "Hydrogen Peroxide Production in Trickle-Bed Electrochemical Reactors", Oloman and Watkinson, *Journal of Applied Electrochemistry*, (1979) pp. 117—123.

It has been discovered that a stabilizing agent present in the electrolyte solution minimizes the amount of peroxide decomposed during electrolysis which maximizes the electrical efficiency of the cell, i.e., more peroxide is recovered per unit of energy expended.

To be suitable for use as a stabilizing agent, a compound must be chemically, thermally, and electrically stable to the conditions of the cell. Compounds that form chelates or complexes with the impurities have been found to be particularly suitable. These compounds include alkali metal salts of ethylenediaminetetraacetic acid (EDTA), stannates, phosphates, and 8-hydroxyquinoline. Most particularly preferred are salts of EDTA because of their availability, low cost and ease of handling.

The stabilizing agent should be present in a concentration sufficient to inactivate at least a portion of the catalytically active impurities and preferably sufficient to inactivate substantially all of the impurities. The amount of stabilizing agent needed will differ with the amount of impurities present in a particular electrolyte solution. An insufficient amount of stabilizer will result in the decomposition of substantial amounts of peroxide. Conversely, excessive amounts of stabilizing agents are unnecessary and wasteful. The actual amount needed for a particular solution may be easily determined by monitoring the amount of peroxide decomposing during electrolysis, or, more preferably, by chemically analyzing the impurity concentration in the electrolyte. Stabilizing agent concentrations of from 0.05 to 5 grams per liter of electrolyte solution have generally been found to be adequate for most applications.

Alkali metal compounds suitable for use in the improved electrolyte solution are those that are readily soluble in water and will not precipitate substantial amounts of $HO_2^-$. Suitable compounds are known to include alkali metal hydroxides and alkali metal carbonates such as sodium carbonate. Alkali metal hydroxides such as sodium hydroxide and potassium hydroxide are particularly preferred because they are readily available and are easily dissolved in water.

The alkali metal compound preferably should have a concentration in the solution of from 0.01 to 2.0 moles of alkali metal compound per liter of electrolyte solution (moles/liter). If the concentration is substantially below 0.01 mole/liter, the resistance of the electrolyte solution becomes too high and excessive electrical energy is consumed. Conversely, if the concentration is substantially above 2.0 moles/liter, the alkali metal compound:peroxide ratio becomes too high and the product solution contains too much alkali metal compound and too little peroxide. When alkali metal hydroxides are used, concentrations from 0.5 to 2.0 moles/liter of alkali metal hydroxide have been found to be particularly suitable.

Impurities which are catalytically active for the decomposition of peroxides are also present in the solution. These substances are not normally added intentionally but are present only as impurities. They are usually dissolved in the solution, however, some may be only suspended therein. They include ions of lead, iron, copper, and chromium. As a general rule, the rate of decomposition of the peroxide increases as the concentration of the catalytically active substance increases. However, when more than one of the above-listed ions are present the effect of the mixture is frequently synergistic, i.e., the peroxide decomposition rate when more than one type of ion are present is greater than the sum of the individual peroxide decomposition rate when only one type of ion is present. The actual concentration of these impurities depends upon the purity of the components used to prepare the electrolyte solution and the types of materials the solution contacts during handling and storage. Impurity concentrations of less than 0.1 part per million are known to have a detrimental effect on the stability of peroxide solutions.

The solution is prepared by blending an alkali metal compound and a stabilizing agent with an aqueous liquid. The alkali metal compound dissolves in the water, while the stabilizing agent either dissolves in the solution or is suspended therein. Optionally, the solution may be prepared by dissolving or suspending a stabilizing agent in a previously prepared aqueous alkali metal compound solution, or by dissolving an alkali metal compound in a previously prepared aqueous stabilizing agent solution. Optionally, the solutions may be prepared separately and blended together.

The prepared aqueous solution has a concentration of from 0.01 to 2.0 moles alkali metal compound per liter of solution and from 0.05 to 5.0 grams of stabilizing agent per liter of solution. Other components may be present in the solution so long as they do not substantially interfere with the desired electrochemical reactions.

A preferred solution is prepared by dissolving about 40 grams of NaOH (1 mole of NaOH) in about 1 liter of water. Next, 1.5 ml of an aqueous 1.0 molar solution of the sodium salt of EDTA is added to provide an EDTA concentration of 0.5 gram per liter of solution. The so-prepared solution is ready for use in an electrochemical cell.

Suitable electrolytic cells comprise an anode and a cathode spaced apart by a separator. The separator is usually a hydraulically permeable sheet of asbestos fibers, although an ion exchange membrane sheet could also be used. The separator impedes the flow of liquids between the compartments housing the two electrodes.

The cathode may be a hydraulically permeable, electrically conductive body having a plurality of passageways, while the anode may be a solid, electrically conductive body. The electrodes are connected through a power supply which provides electrical energy to the cell. The anode compartment has an electrolyte inlet and an outlet port, while the cathode compartment usually has only an outlet port. A gas chamber adjoins one face of the cathode and provides a pathway for gas to contact a face of the cathode.

In operation, the improved electrolyte solution described above is fed into the anode chamber of the cell. At least a portion of it flows through the separator, into the cathode compartment and into passageways of the cathode. An oxygen-containing gas is fed through the gas chamber and into the cathode passageways where it meets the electrolyte. Electrical energy, supplied by the power supply, is passed between the electrodes at a level sufficient to cause the oxygen to be reduced to form hydrogen peroxide. In most applications, electrical energy is supplied at a potential of from 1.0 to 2.0 volts and at a current density of from 0.05 to 0.5 amp per square inch (77.5 to 775 amp/$m^2$).

The so-formed peroxide solution is then removed from the cathode compartment through the outlet port.

The concentration of impurities which would ordinarily catalytically decompose the peroxide during electrolysis is minimized. They have been chelated or complexed with the stabilizing agent. Thus, the cell operates in a more efficient manner.

Example 2

An electrochemical cell having a platinum metal coated titanium anode and a carbon particle, packed bed cathode separated by a porous asbestos diaphragm was used to produce an alkaline peroxide solution. An aqueous sodium hydroxide electrolyte solution having a concentration of about 1.0 mole NaOH per liter of solution and iron ions at a concentration of about 1—2 parts per million was fed into the chamber housing the anode. The solution also contained about 0.5 gram of a sodium salt of EDTA per liter of solution. A portion of the electrolyte was flowed through the porous separator, into the cathode compartment, and into the cathode passageways. Oxygen gas was fed into the cathode passageways through a side of the cathode adjoining a gas chamber. The oxygen gas was electro-chemically reacted with water contained in the electrolyte to form an alkaline peroxide solution. The electrical current was maintained at about .2 amp per square inch (31 amp/$m^2$) at about 2 volts. The alkaline peroxide solution was then removed from the cathode compartment. The current efficiency of the cell was determined to be about 36 percent.

Comparative Example

The electrochemical process described in Example 2 was repeated, except no stabilizing agent (EDTA) was added to the sodium hydroxide electrolyte solution. Current efficiency of the cell was found to be about 28 percent.

**Claims**

1. A method for electrochemically reacting a liquid with a gas in an electrochemical cell of the type having at least two electrodes separated by a liquid permeable separator; at least one of said electrodes supporting said separator and being porous and self-draining, said method comprising: (a) flowing the gas and the liquid into the self-draining electrode; (b) electrochemically reacting the liquid with the gas to form at least one nonvolatile product; and (c) removing the electrochemical products from said self-draining electrode, characterized in that in step (a) the gas and the liquid are introduced at different sides of the separator and the liquid flow into the porous, self-draining electrode is through the separator and thereby controlled at a rate which is about equal to the drainage rate of the electrode, and in an amount which fills only a portion of the electrode pores.

2. The method of Claim 1 characterized in that the amount and rate of liquid flowing through the separator is controlled by adjusting the area of the separator contacted by the liquid.

3. The method of Claim 1 characterized in that the amount and rate of liquid flowing through the separator is controlled by adjusting the atmospheric pressure exerted on the liquid.

4. The method of Claim 1, 2 or 3 characterized in that the nonvolatile product is sodium hydroxide.

5. The method of any one of the preceding claims characterized in that the gas is an oxygen containing gas or substantially pure oxygen.

6. The method of any one of the preceding claims characterized in that the self-draining electrode is a cathode.

7. The method of any one of the preceding claims characterized in that the cell includes an ion exchange membrane located between the separator and an anode.

8. The method of any one of the preceding claims, characterized in that the liquid is an aqueous alkaline solution containing an impurity catalytically active for the decomposition of peroxides and a stabilizing agent at a concentration sufficient to render at least a portion of the catalyst inactive.

9. The method of Claim 8 characterized in that the stabilizing agent is a chelating agent.

10. The method of Claim 9, characterized in that the chelating agent is an alkali metal salt of ethylenediaminetetraacetic acid.

11. The method of Claim 10 characterized in that the alkali metal salt is sodium.

12. The method of Claim 8, characterized in that the solution contains an alkali metal hydroxide selected from potassium hydroxide or sodium hydroxide.

13. The method of any one of Claims 8 to 12 characterized in that the stabilizing agent is present at a concentration of from 0.05 to 5.0 grams per liter of solution.

14. The method of Claim 12 characterized in that the concentration of the alkali metal hydroxide is from 0.01 to 2 moles per liter of solution.

**Patentansprüche**

1. Verfahren zur elektrochemischen Umsetzung einer Flüssigkeit mit einem Gas in einer elektrochemischen Zelle von der Art, die zumindest zwei, durch einen Flüssigkeits-permeablen Separator getrennte Elektroden aufweist; und mindestens eine der Elektroden, die porös und selbstablaufend ist, den Separator lagert, umfassend

(a) das Zufließen des Gases und der Flüssigkeit in die selbstablaufende Elektrode;

(b) die elektrochemische Umsetzung der Flüssigkeit mit dem Gas unter Ausbildung von zumindest einem nichtflüchtigen Produkt; und

(c) das Entfernen der elektrochemischen Produkte von der selbstablaufenden Elektrode; dadurch gekennzeichnet, daß in Schritt (a) das Gas und die Flüssigkeit auf verschiedenen Seiten des Separators eingeführt werden und die Flüssigkeit durch den Separator in die poröse selbstablaufende Elektrode fließt und dabei bei einer Geschwindigkeit gehalten wird, die ungefähr der Abflußgeschwindigkeit der Elektrode entspricht und zwar in einer solchen Menge, die nur einen Teil der Elektrodenporen auffüllt.

2. Verfahren nach Anspruch 1, dadurch gekennzeichnet, daß die Menge und die Geschwindigkeit des Flüssigkeitsflusses durch den Separator durch das Einstellen der Fläche des Separators kontrolliert wird, die mit der Flüssigkeit in Kontakt kommt.

3. Verfahren nach Anspruch 1, dadurch gekennzeichnet, daß die Menge und die Geschwindigkeit, mit der die Flüssigkeit durch den Separator fließt, durch Einstellen des atmosphärischen Druckes kontrolliert wird, der auf die Flüssigkeit ausgeübt wird.

4. Verfahren nach Anspruch 1, 2 oder 3, dadurch gekennzeichnet, daß das nichtflüchtige Produkt Natriumhydroxid ist.

5. Verfahren nach einem der vorhergehenden Ansprüche, dadurch gekennzeichnet, daß das Gas ein Sauerstoff enthaltendes Gas oder im wesentlichen reiner Sauerstoff ist.

6. Verfahren nach einem der vorhergehenden Ansprüche, dadurch gekennzeichnet, daß die selbstablaufende Elektrode eine Kathode ist.

7. Verfahren nach einem der vorhergehenden Ansprüche, dadurch gekennzeichnet, daß die Zelle eine Ionenaustauschmembran umfaßt, die sich zwischen dem Separator und einer Anode befindet.

8. Verfahren nach einem der vorhergehenden Ansprüche, dadurch gekennzeichnet, daß die Flüssigkeit eine wäßrige alkalische Lösung ist, die eine bezüglich der Zersetzung von Peroxiden katalytisch aktive Verunreinigung und einen Stabilisator in einer Konzentration enthält, die ausreicht, um zumindest einen Teil des Katalysators zu inaktivieren.

9. Verfahren nach Anspruch 8, dadurch gekennzeichnet, daß der Stabilisator ein Chelatbildner ist.

10. Verfahren nach Anspruch 9, dadurch gekennzeichnet, daß der Chelatbildner ein Alkalisalz von Ethylendiamintetraessigsäure ist.

11. Verfahren nach Anspruch 10, dadurch gekennzeichnet, daß das Alkalisalz aus Natrium ist.

12. Verfahren nach Anspruch 8, dadurch gekennzeichnet, daß die Lösung Natriumhydroxid oder Kaliumhydroxid als Alkalihydroxid enthält.

13. Verfahren nach einem der Ansprüche 8 bis 12, dadurch gekennzeichnet, daß der Stabilisator in einer Konzentration von 0,05 bis 5,0 g/l Lösung vorliegt.

14. Verfahren nach Anspruch 12, dadurch gekennzeichnet, daß das Alkalihydroxid in einer Konzentration von 0,01 bis 2 Mol/l Lösung vorliegt.

**Revendications**

1. Procédé pour faire réagir par voie électrochimique un liquide avec un gaz dans une cellule électrochimique du type présentant au moins deux électrodes séparées par un séparateur perméable aux liquides, au moins l'une desdites électrodes portant ledit séparateur et étant poreuse et à auto-écoulement, ce procédé consistant: (a) à faire s'écouler le gaz et le liquide dans l'électrode à auto-écoulement, (b) à faire réagir par voie électrochimique le liquide avec le gaz de façon à former au moins un produit non volatil, et (c) à extraire les produits électrochimiques de l'électrode à auto-écoulement, caractérisé en ce que, dans l'étape (a), on introduit le gaz et le liquide sur des côtés différents du séparateur et

l'écoulement du liquide dans l'électrode poreuse et à autoécoulement se fait à travers le séparateur et est ainsi réglé à un débit, qui est environ égal au débit d'écoulement de l'électrode, et dans une quantité qui ne remplit qu'une partie des pores d'électrode.

2. Procédé de la revendication 1, caractérisé en ce qu'on règle la quantité et le débit de liquide s'écoulant à travers le séparateur en ajustant l'aire du séparateur au contact de laquelle vient le liquide.

3. Procédé de la revendication 1, caractérisé en ce qu'on règle la quantité et le débit de liquide s'écoulant à travers le séparateur en ajustant la pression atmosphérique exercée sur le liquide.

4. Procédé de la revendication 1, 2 ou 3, caractérisé en ce que le produit non volatil est de l'hydroxyde de sodium.

5. Procédé de l'une quelconque des revendications précédentes, caractérisé en ce que le gaz est un gaz contenant de l'oxygène ou de l'oxygène sensiblement pur.

6. Procédé de l'une quelconque des revendications précédentes, caractérisé en ce que l'électrode à autoécoulement est une cathode.

7. Procédé de l'une quelconque des revendications précédentes, caractérisé en ce que la cellule comporte une membrane échangeuse d'ions disposée entre le séparateur et une anode.

8. Procédé de l'une quelconque des revendications précédentes, caractérisé en ce que le liquide est une solution alcaline aqueuse contenant une impureté active sur le plan catalytique pour la décomposition des peroxydes et un agent stabilisant présent sous une concentration suffisante pour rendre inactive au moins une partie du catalyseur.

9. Procédé de la revendication 8, caractérisé en ce que l'agent stabilisant est un agent de chélation.

10. Procédé de la revendication 9, caractérisé en ce que l'agent de chélation est un sel de métal alcalin de l'acide éthylènediamine-tétracétique.

11. Procédé de la revendication 10, caractérisé en ce que le sel de métal alcalin est le sodium.

12. Procédé de la revendication 8, caractérisé en ce que la solution contient un hydroxyde de métal alcalin choisi parmi l'hydroxyde de potassium ou l'hydroxyde de sodium.

13. Procédé de l'une quelconque des revendications 8 à 12, caractérisé en ce que l'agent stabilisant est présent sous une concentration de 0,05 à 5,0 grammes par litre de solution.

14. Procédé de la revendication 12, caractérisé en ce que la concentration de l'hydroxyde de métal alcalin est de 0,01 à 2 moles par litre de solution.

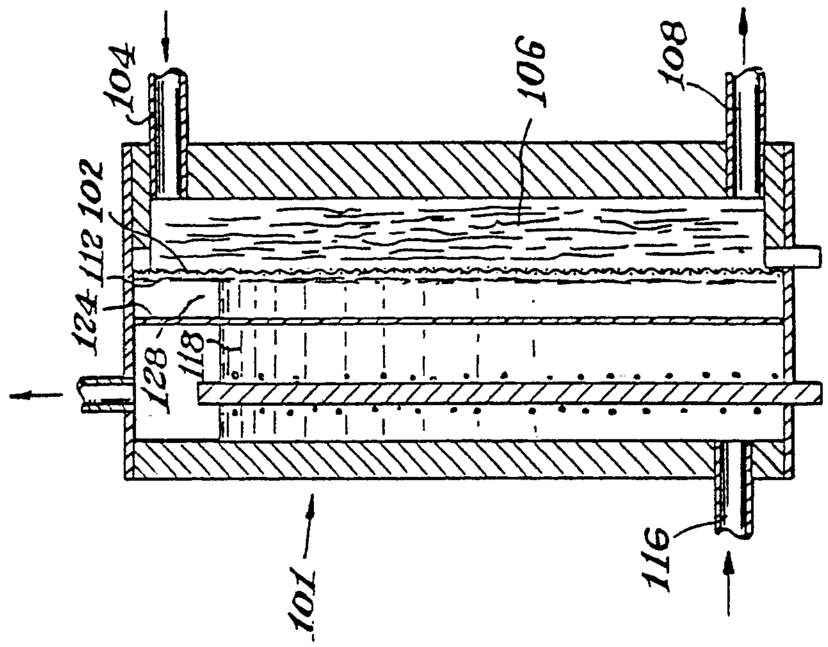
104
106
108
124
112
102
128
118
101
116

Fig. 2

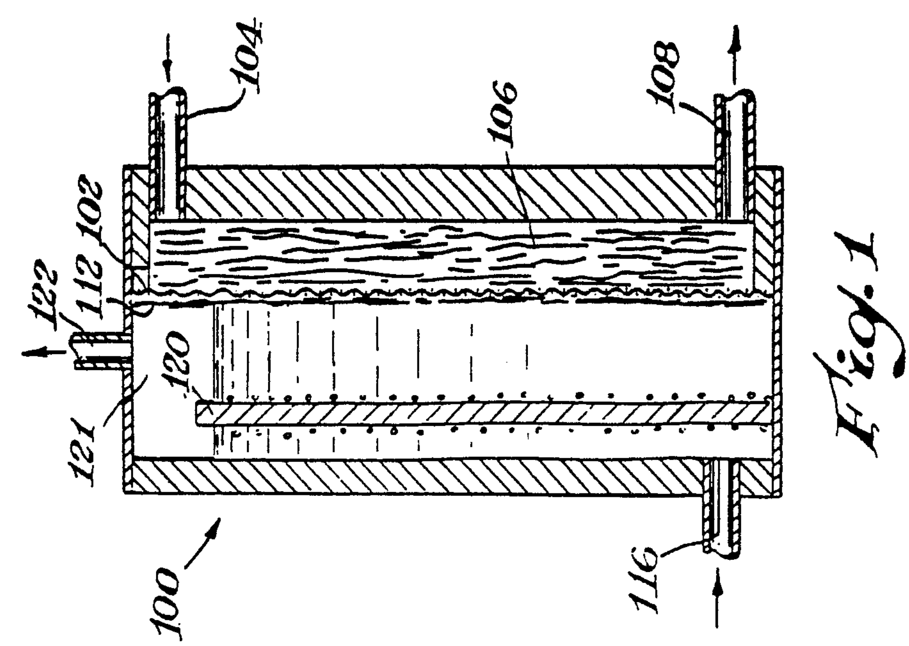
104
106
108
122
112
102
120
121
100
116

Fig. 1